# EUROPEAN PATENT APPLICATION

(11) **EP 4 686 849 A1**
(43) Date of publication of application: **04.02.2026**
(21) Application number: 25192591.3
(22) Date of filing: 29.07.2025
(51) Int. Cl.: F16C 33/78, F16C 33/80, F16J 15/3232, F16J 15/3244, F16J 15/322, F16J 15/44

(54) **PROPELLER SHAFT HYBRID LIP AND LABYRINTH SEAL**

(30) Priority: 29.07.2024 US 202418787316
(71) Applicant: PRATT & WHITNEY CANADA CORP., Longueuil, Québec J4G 1A1 (CA)
(72) Inventor: TURCOTTE, Herve, (01BE5) Longueuil, J4G 1A1 (CA); DUROCHER, Eric S., (01BE5) Longueuil, J4G 1A1 (CA); KISUN, Gavin, (01BE5) Longueuil, J4G 1A1 (CA); POULIN, Martin, (01BE5) Longueuil, J4G 1A1 (CA); CARTIER, Simon, (01BE5) Longueuil, J4G 1A1 (CA); LOGAN, Adam, (01BE5) Longueuil, J4G 1A1 (CA)
(74) Representative: Dehns

(57) **Abstract**

A seal assembly (40) of a shaft bearing system (24) of an aircraft propeller system (10) includes an inner seal element (42) fixed to a shaft (20) and rotatable therewith about a shaft axis (18) and an outer seal assembly (82) located radially outboard of the inner seal element (42) and rotationally fixed relative to the shaft axis (18). The outer seal assembly (82) includes an outer seal (44) interactive with the inner seal element (42) at a plurality of knife edges (50) of the inner seal element (42), and a lip seal (52) having a seal lip (58) interactive with the inner seal element (42). The outer seal assembly (82) includes a first circumferential seal segment (84) and a second circumferential seal segment (86) abutting the first circumferential seal segment (84) at a seal joint (88). The lip seal (52) is positioned axially between the outer seal (44) and a bearing (38) of the shaft bearing system (24).

## Description

### BACKGROUND

Exemplary embodiments pertain to the art of propeller shaft and bearing systems, and the sealing thereof.

In propeller-driven aircraft systems, the propeller is located on a propeller shaft, which is rotatable about a shaft axis. The propeller shaft is supported by one or more bearings, and seals are installed to prevent leakage of lubricant from the bearing. These seals however, tend to wear in operation and leak oil from the bearing which is unacceptable to customers and also creates environmental issues. The art would welcome better performing and serviceable sealing solutions for the propeller shaft and the associated bearing.

### BRIEF DESCRIPTION

According to an aspect of the present invention, a seal assembly of a shaft bearing system of an aircraft propeller system includes an inner seal element fixed to a shaft and rotatable therewith about a shaft axis and an outer seal assembly located radially outboard of the inner seal element and rotationally fixed relative to the shaft axis. The outer seal assembly includes an outer seal interactive with the inner seal element at a plurality of knife edges of the inner seal element, and a lip seal having a seal lip interactive with the inner seal element. The outer seal assembly includes a first circumferential seal segment and a second circumferential seal segment abutting the first circumferential seal segment at a seal joint. The lip seal is positioned axially between the outer seal and a bearing of the shaft bearing system.

Optionally, and in accordance with the above, the lip seal includes a seal base connected to the seal lip via a seal hinge. The seal lip and the seal base define a seal opening therebetween.

Optionally, and in accordance with any of the above, the lip seal is positioned such that the seal opening is faced away from the outer seal.

Optionally, and in accordance with any of the above, a biasing element biases a position of the seal lip toward the inner seal element.

Optionally, and in accordance with any of the above, one or more airflow openings are defined in the outer seal and are configured to inject airflow into a seal cavity to urge the seal lip radially away from the seal platform during operation.

Optionally, and in accordance with any of the above, one or more locating features are defined in the outer seal to circumferentially position the outer seal assembly.

Optionally, and in accordance with any of the above, the first circumferential seal segment includes one or more circumferentially extending first segment fingers installed into one or more complimentary second segment pockets at least partially defining a tortuous pathway in an axial direction between the first seal segment and the second seal segment.

Optionally, and in accordance with any of the above, the second seal segment includes one or more circumferentially extending second segment fingers installed into one or more complimentary first segment pockets to at least partially define the tortuous pathway.

According to another aspect of the present invention, a bearing system for a shaft of a propeller system of an aircraft includes a bearing housing at least partially surrounding a shaft, a bearing including a plurality of bearing elements positioned in the bearing housing and supportive of the shaft, and a seal assembly to seal the bearing housing. The seal assembly includes an inner seal element fixed to the shaft and rotatable therewith about a shaft axis, and an outer seal assembly located radially outboard of the inner seal element and rotationally fixed relative to the shaft axis. The outer seal assembly includes an outer seal interactive with the inner seal element at a plurality of knife edges of the inner seal element, and a lip seal having a seal lip interactive with the inner seal element. The outer seal assembly includes a first circumferential seal segment, and a second circumferential seal segment abutting the first circumferential seal segment at a seal joint. The lip seal is positioned axially between the outer seal and the bearing.

Optionally, and in accordance with any of the above, the lip seal includes a seal base connected to the seal lip via a seal hinge, and the seal lip and the seal base define a seal opening therebetween.

Optionally, and in accordance with any of the above, the lip seal is positioned such that the seal opening is faced away from the outer seal.

Optionally, and in accordance with any of the above, one or more biasing elements are configured to bias a position of the seal lip toward the inner seal element.

Optionally, and in accordance with any of the above, a seal stop is formed in the bearing housing to limit radially outward travel of the seal lip.

Optionally, and in accordance with any of the above, one or more airflow openings are defined in the outer seal and are configured to inject airflow into a seal cavity to urge the seal lip radially away from the seal platform during operation.

Optionally, and in accordance with any of the above, the first circumferential seal segment includes one or more circumferentially extending first segment fingers installed into one or more complimentary second segment pockets at least partially defining a tortuous pathway in an axial direction between the first seal segment and the second seal segment.

Optionally, and in accordance with any of the above, the second seal segment includes one or more circumferentially extending second segment fingers installed into one or more complimentary first segment pockets to at least partially define the tortuous pathway.

According to another aspect of the present invention, a propeller assembly of an aircraft includes a propeller mounted on a propeller shaft and rotatable about a shaft axis, and a bearing system supportive of the propeller shaft. The bearing system includes a bearing housing at least partially surrounding the propeller shaft, a bearing including a plurality of bearing elements positioned in the bearing housing and supportive of the propeller shaft, and a seal assembly to seal the bearing housing. The seal assembly includes an inner seal element fixed to the propeller shaft and rotatable therewith about a shaft axis, and an outer seal assembly located radially outboard of the inner seal element and rotationally fixed relative to the shaft axis. The outer seal assembly includes an outer seal interactive with the inner seal element at a plurality of knife edges of the inner seal element, and a lip seal having a seal lip interactive with the inner seal element. The outer seal assembly includes a first circumferential seal segment and a second circumferential seal segment abutting the first circumferential seal segment at a seal joint. The lip seal is positioned axially between the outer seal and the bearing.

Optionally, and in accordance with any of the above, the lip seal includes a seal base connected to the seal lip via a seal hinge and the seal lip and the seal base define a seal opening therebetween.

Optionally, and in accordance with any of the above, the lip seal is positioned such that the seal opening is faced away from the outer seal.

Optionally, and in accordance with any of the above, one or more biasing elements are configured to bias a position of the seal lip toward the inner seal element.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of a propeller system;
FIG. 2 is a cross-sectional view of an embodiment of a bearing and seal assembly of a propeller shaft;
FIG. 3 is a view of an embodiment of a split lip seal of a bearing seal assembly;
FIG. 4 is an illustration of an embodiment of a seal joint of a split lip seal;
FIG. 5 is a detail view of an embodiment of a split lip seal;

### DETAILED DESCRIPTION

A detailed description of one or more embodiments of the disclosed apparatus and method are presented herein by way of exemplification and not limitation with reference to the Figures.

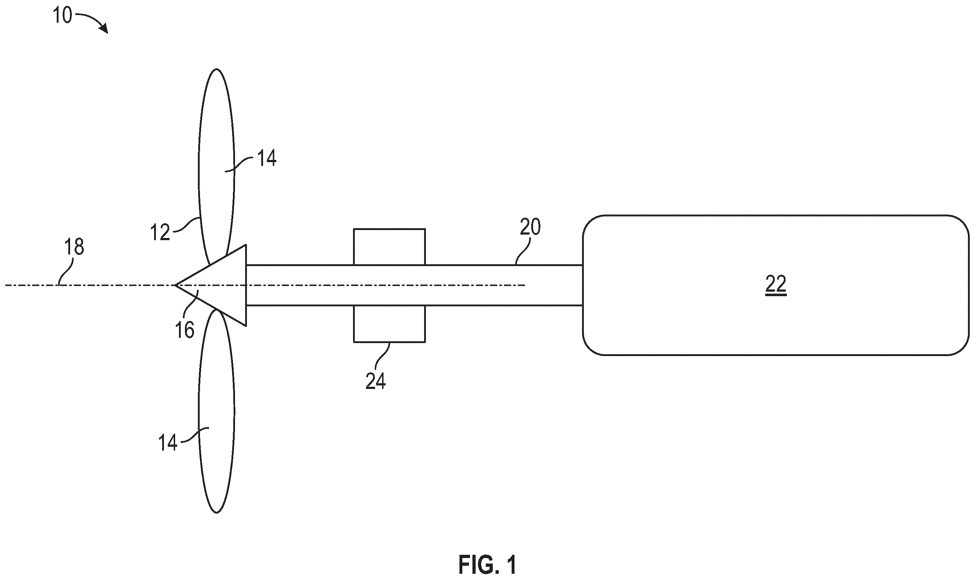

Referring now to FIG. 1, an embodiment of a propeller system 10 of an aircraft is illustrated. The propeller system 10 includes a propeller 12 having a plurality of blades 14 extending radially from a propeller hub 16. The propeller 12 is driven to rotate about a propeller axis 18 by a propeller shaft 20 to which the propeller 12 is secured. The propeller shaft 20 is driven to rotate about the propeller axis 18 by an engine 22 operably connected to the propeller shaft 20. Additionally, the propeller shaft 20 is supported at the propeller axis 18 by a bearing system 24.

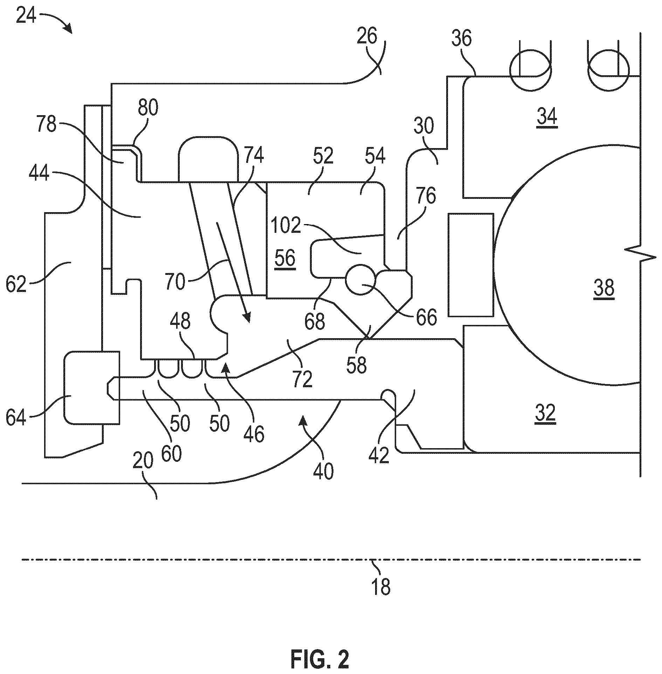

Referring now to FIG. 2, the bearing system 24 includes a housing 26 which defines a bearing enclosure 30. A bearing inner race 32 is disposed at the propeller shaft 20 and rotates about the propeller axis 18 with the propeller shaft 20 and a bearing outer race 34 is disposed at an inner surface 36 of the bearing enclosure 30. A plurality of bearing elements 38 are located radially between the bearing inner race 32 and the bearing outer race 34.

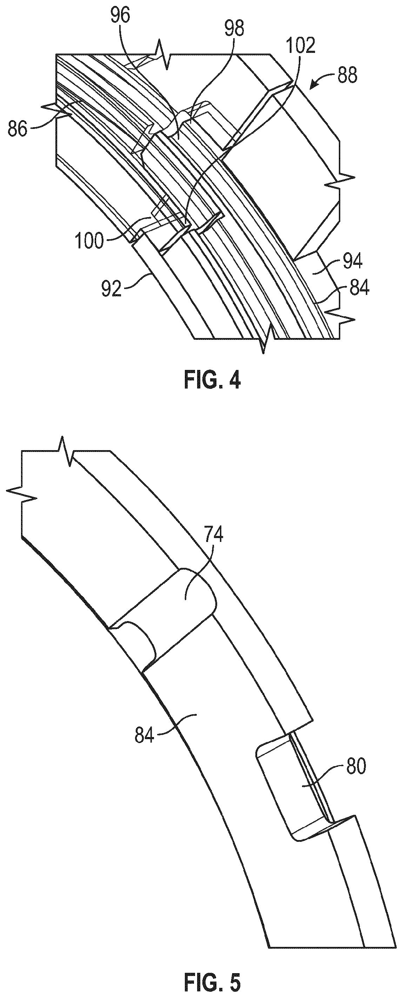

A seal assembly 40 is installed to the bearing system 24 to prevent egress of bearing lubricant from the bearing enclosure 30 and to prevent ingress of air, dirt, or other contaminants into the bearing enclosure 30. The seal assembly includes a rotating inner seal element 42 installed to the propeller shaft 20 and rotatable about the propeller axis 18 therewith. Additionally, a rotationally fixed outer seal 44 is installed to the inner surface 36. A seal interface 46 is defined between a radially inner surface 48 of the outer seal 44, and the inner seal element 42. In some embodiments, the inner seal element 42 is configured with a plurality of knife edges 50 that define the seal interface 46 with the radially inner surface 48. Additionally, in some embodiments the radially inner surface 48 is formed from an abradable material into which the plurality of knife edges 50 rub during operation. The outer seal 44 may include one or more anti-rotation features to circumferentially position the outer seal 44 in the bearing housing 26. In one embodiment, the bearing housing 26 includes a housing tab 78 and the outer seal 44 includes a complimentary seal recess 80, also shown in FIG. 5, receivable of the housing tab 78. When the seal recess 80 is located over the housing tab 78, proper circumferential position of the outer seal 44 in the bearing housing 26 is maintained.

An elastomeric lip seal 52 is located to axially abut the outer seal 44 and is located such that the lip seal 52 is disposed axially between the knife edges 50 and the bearing system 24. The lip seal 52 includes a seal base 54, which in some embodiments is located at the inner surface 36. A seal hinge portion 56 connects the seal base 54 to a seal lip 58, that is disposed to be interactive with a seal platform 60 of the inner seal element 42. The seal base 54 and the seal lip 58 define a seal opening 102 therebetween. The seal assembly 40 includes one or more retaining plates 62 installed to the bearing housing 26 and extending radially inwardly to at least partially cover the lip seal 52 and the seal platform 60. In some embodiments, a felt seal 64 is installed between the retaining plate 62 and the seal platform 60 to seal the gap between those two components. In the embodiment of FIG. 2, the lip seal 52 is positioned such that the seal opening 102 faces away from the outer seal 44 and toward the bearing system 24.

The seal lip 58 is configured to rest on the seal platform 60 when the engine is shut down, and is configured to lift from the seal platform 60 when the engine is in operation. The seal assembly 40 includes features to control movement of the seal lip 58. A garter spring 66 is installed in a radially outer lip surface 68 of the seal lip 58. The garter spring 66 force acts radially inwardly on the seal lip 58 urging the seal lip 58 toward the seal platform 60. During operation, airflow 70 is directed into a seal cavity 72 defined between the outer seal 44, the seal lip 58 and the seal platform 60. This pressurizes the seal cavity 72 and when the pressure of the airflow 70 overcomes the spring force of the garter spring 66, the seal lip 58 lifts off of the seal platform 60 resulting in a gap between the seal lip 58 and the seal platform 60. The airflow 70 stops at shut down of the engine, and the seal lip 58 then returns to contact with the seal platform 60. In some embodiments, the outer seal 44 includes one or more airflow slots 74 to provide the airflow 70 to the seal cavity 72 during operation. In some embodiments, a seal stop 76 formed for example in the bearing housing 26, is interactive with the seal lip 58 to limit the travel of the seal lip 58 radially outwardly by interfering with the seal lip 58 when a predetermined height of the seal lip 58 is reached.

In some embodiments, the outer seal 44 and the lip seal 52 are separate components installed separately into the bearing housing 26, but in other embodiments the outer seal 44 and the lip seal 52 are formed and/or installed as axially unitary components.

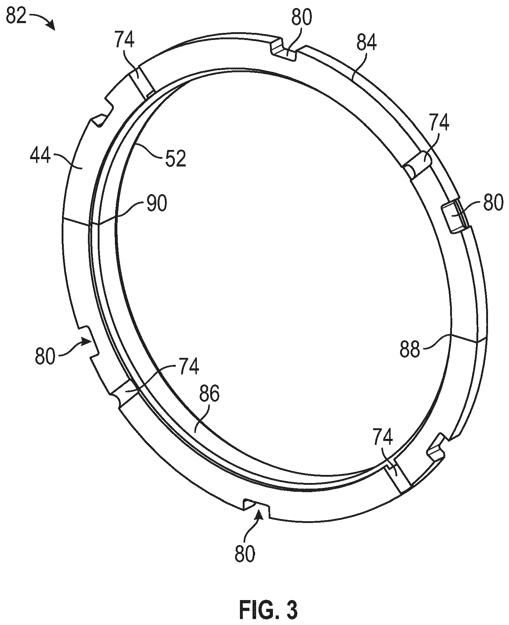

Referring now to FIG. 3 and 4, an outer seal assembly 82 is defined including the outer seal 44 and the lip seal 52. The seal assembly 82 is circumferentially split into a first seal segment 84 and a second seal segment 86. The first seal segment 84 and the second seal segment 86 are joined at a first seal joint 88 and a second seal joint 90. In some embodiments, the second seal joint 90 is located 180 degrees from the first seal joint 88 relative to the propeller axis 18. A tortuous path is defined axially and in some embodiments radially along the first seal joint 88 and the second seal joint 90 so that there is not a straight linear leakage path from a first axial seal end 92 to a second axial seal end 94 of the outer seal assembly 82. This tortuous path reduces the occurrence of oil leakage from the bearing enclosure 30 and reduces the intrusion of air or other contaminants into the bearing enclosure 30.

The tortuous path may be achieved via localized circumferential and radial overlap of the first seal segment 84 and the second seal segment 86 at the first seal joint 88 and the second seal joint 90. In the embodiment illustrated, the first seal segment 84 includes one or more circumferentially-extending first segment fingers 96 that are installed into corresponding second segment pockets 98 of the adjacent second seal segment 86. Additionally, the second seal segment 86 includes one or more circumferentially-extending second segment fingers 100 that are installed into corresponding first segment pockets 102 of the adjacent first seal segment 84. In some embodiments, the first seal joint 88 includes at least one first segment finger 96 and one second segment finger 100, and the second seal joint 90 similarly includes at least one first segment finger 96 and one second segment finger 100. In such embodiments, the second segment finger 100 is axially offset from the first segment finger 96.

The circumferentially split configuration of the seal assembly 82 allows for better serviceability of the seal assembly 82 due to improved ease of removal, while the tortuous path at the seal joints 88, 90 between the first seal segment 84 and the second seal segment 86 reduces the potential leakage path from the bearing enclosure 30, thereby improving performance and service life of the bearing system 24.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the essential scope thereof. Therefore, it is intended that the present invention not be limited to the particular embodiment disclosed as the best mode contemplated for carrying out this present invention, but that the present invention will include all embodiments falling within the scope of the claims.

## Claims

1. A seal assembly (40) of a shaft bearing system (24) of a propeller system (10) of an aircraft, the seal assembly comprising:
an inner seal element (42) fixed to a shaft (20) and rotatable therewith about a shaft axis (18); and
an outer seal assembly (82) located radially outboard of the inner seal element (42) and rotationally fixed relative to the shaft axis (18), the outer seal assembly (82) including:
an outer seal (44) interactive with the inner seal element (42) at a plurality of knife edges (50) of the inner seal element (42); and
a lip seal (52) having a seal lip (58) interactive with the inner seal element (42);
wherein the outer seal assembly (82) includes:
a first circumferential seal segment (84); and
a second circumferential seal segment (86) abutting the first circumferential seal segment (84) at a seal joint (88); and
wherein the lip seal (52) is disposed axially between the outer seal (44) and a bearing (38) of the shaft bearing system (24).

2. The seal assembly (40) of claim 1, wherein:
the lip seal (52) includes a seal base (54) connected to the seal lip (58) via a seal hinge (56); and
the seal lip (58) and the seal base (54) define a seal opening (102) therebetween.

3. The seal assembly (40) of claim 2, wherein the lip seal (52) is positioned such that the seal opening (102) is faced away from the outer seal (44).

4. The seal assembly (40) of any preceding claim, further comprising one or more biasing elements (66) to bias a position of the seal lip (58) toward the inner seal element (42).

5. The seal assembly (40) of any preceding claim, further comprising one or more airflow openings (74) defined in the outer seal (44) configured to inject airflow (70) into a seal cavity (72) to urge the seal lip (58) radially away from the seal platform (60) during operation.

6. The seal assembly (40) of any preceding claim, further comprising one or more locating features defined in the outer seal (44) to circumferentially position the outer seal assembly (82).

7. The seal assembly (40) of any preceding claim, wherein the first circumferential seal segment (84) includes one or more circumferentially extending first segment fingers (96) installed into one or more complimentary second segment pockets (98) at least partially defining a tortuous pathway in an axial direction between the first seal segment (84) and the second seal segment (86).

8. The seal assembly (40) of any preceding claim, wherein the second seal segment (86) includes one or more circumferentially extending second segment fingers (100) installed into one or more complimentary first segment pockets (102) to at least partially define the tortuous pathway.

9. A bearing system (24) for a shaft of a propeller system (10) of an aircraft, comprising:
a bearing housing (26) at least partially surrounding a shaft (20);
a bearing including a plurality of bearing elements (38) disposed in the bearing housing (26) and supportive of the shaft (20); and
the seal assembly (40) of any preceding claim to seal the bearing housing (26).

10. The bearing system (24) of claim 9, further comprising a seal stop (76) formed in the bearing housing (26) to limit radially outward travel of the seal lip (58).

11. A propeller assembly (10) of an aircraft, comprising:
a propeller (12) mounted on a propeller shaft (20) and rotatable about a shaft axis (18); and
the bearing system (24) of claim 9 or 10, wherein in the shaft (20) is the propeller shaft (20), and the bearing system (24) is supportive of the propeller shaft (20)
